# EUROPÄISCHE PATENTSCHRIFT

(11) **EP 1 186 523 B1**
(45) Veröffentlichungstag und Bekanntmachung des Hinweises auf die Patenterteilung: **26.05.2004**
(21) Anmeldenummer: 01120197.7
(22) Anmeldetag: 23.08.2001
(51) Int. Cl.: B62K 23/04, B62M 25/04

(54) **Schalter für ein Fahrrad**
Shifting device for a bicycle
Dispositif de changement de vitesse pour bicyclette

(30) Priorität: 05.09.2000 DE 10043612
(43) Veröffentlichungstag der Anmeldung: 13.03.2002
(73) Patentinhaber: SRAM Deutschland GmbH, 97404 Schweinfurt (DE)
(72) Erfinder: Wessel, Robert, 97074 Würzburg (DE); Blaschke, Georg, 97505 Geldersheim (DE)

(56) Entgegenhaltungen:
- DE-A- 19 918 520
- US-A- 5 660 083
- US-A- 5 666 858

## Beschreibung

Die Erfindung betrifft einen Schalter zur Betätigung eines Getriebes an einem Fahrrad gemäß dem Oberbegriff des Anspruches 1.

Mit dem deutschen Patent DE 19 918 520 ist ein Schalter zur Betätigung eines Getriebes an einem Fahrrad bekannt geworden, welcher ein Gehäuse zur Befestigung des Schalters am Fahrrad umfasst, sowie ein Griffelement zur Betätigung des Schalters, ein Drehelement und eine Seilspeichervorrichtung, insbesondere eine Wickelspule zum Aufwickeln eines Seiles zur Betätigung des Getriebes, wobei das Drehelement mit der Wickelspule verbunden ist und mindestens eine Sperrklinke aufweist, die in eine Rastverzahnung im Gehäuse eingreift. Vorteilhaft ist dort, dass ein Mitnehmer am Griffelement das Drehelement in einer Spanndrehrichtung direkt mitnimmt, wohingegen die Bewegung des Drehelementes in der entgegengesetzten Drehrichtung, nämlich in der Freigabedrehrichtung, durch die Freigabe der Sperrklinke bewirkt wird. In der letztgenannten Drehrichtung spannt ein Federelement das Drehelement vor, sodass der Schaltvorgang beschleunigt abläuft. Das Federelement besteht aus einer Spiralfeder, die in einer Nut im Drehelement unter Vorspannung eingelegt ist und von einem Mitnehmer am Griffelement betätigt wird.

Der Schalter gemäß der vorliegenden Erfindung weist ebenso eine Klinke zum Halten der einzelnen Gangstufen auf, verbessert die Spiralfederlösung aber insofern, als ein elastisches Element einstückig mit einem Drehteil verbunden ist und mit einer Kontur einer Anformung an einem Griffteil zusammenwirkt. Eine derart vereinfachte Ausführung des Schalters hat nicht nur Kostenvorteile, sondern ermöglicht auch eine vereinfachte Montage des Schalters. Das Drehteil ist ferner mit einer Seilspule verbunden, die ein Zugseil, welches die Verbindung zum Getriebe des Fahrrades herstellt, durch eine Drehung am Griffteil aufwickeln kann.

Es hat sich gezeigt, dass das elastische Element vorzugsweise eine Biegefeder mit einem freien Federende ist, die konkav gebogen ausgeführt ist, wobei die vorgenannte Kontur in den konkaven Bogen der Biegefeder eingreift und diese beim Verdrehen des Griffteils vorspannt. Hierbei gleitet die Kontur am freien Bogen der Biegefeder auf und verschiebt das Drehteil beschleunigt in der Freigabedrehrichtung, nachdem ein Ausheber die Klinke ausgehoben und dem Drehteil den Weg zur nächsten Gangstufe in einer das Zugseil freigebenden Schaltrichtung freigemacht hat. In der das Zugseil spannenden Schaltrichtung wird das Drehteil vom Griffteil durch das Zusammenwirken von Flanken direkt mitgenommen bis zur nächsten Gangstufe, die vom Einrasten der Klinke in die Rastverzahnung des Gehäuses definiert wird.

Eine in der Funktion ähnliche Variante eines mit einer Anformung zusammenwirkenden elastischen Elements ist ebenfalls eine Biegefeder mit einer nach radial außen gerichteten konvexen Krümmung und einem Federende, welches ballig ausgeführt ist und an einer Pfanne der Anformung am Griffteil unter Vorspannung anliegt. Beim Betätigen des Griffteils in der das Zugseil freigebenden Schaltrichtung wird der konvexe Bogen der Biegefeder unter Ausbildung eines Buckels soweit verbogen, bis der vorgenannte Ausheber die Klinke zum Gangwechsel freigibt. Der Vorteil dieser Lösung liegt in dem Zusammenwirken des balligen Federendes mit der Pfanne an der Anformung des Griffteils, weil die Ausbildung der Pfanne derart gestaltet werden kann, dass es dort bei Drehung des Griffteils in der das Zugseil freigebenden Schaltrichtung zu einer Abrollbewegung kommt, die nahezu frei von Reibung ist.

Schließlich wird eine zweite Variante eines elastischen Elements vorgeschlagen, die wiederum eine Biegefeder ist, die aber mindestens eine Windung aufweist und ein fügbares Federende, welches in einer Aufnahme einer Anformung am Griffteil drehbar, aber formschlüssig befestigt werden kann. Von Vorteil ist hier eine Steckverbindung, die sich schon bei der Montage des Schalters fügen lässt. Der Vorteil dieser Variante liegt neben der Zuverlässigkeit der Schaltermontage in seiner Reibungsarmut beim Betätigen auch unter schwierigen Schmierungsbedingungen.

Aus dem vorgenannten Beschreibungen leitet die Erfindung die Aufgabe ab, einen Schalter mit verbesserter Funktion, bestehend aus weniger Teilen, zu schaffen, wobei die Herstellkosten gegenüber den bekannten Schalterausführungen zu verringern sind.

Die Lösung der Aufgabe ist im Kennzeichen des Hauptanspruches beschrieben. Ausgestaltungen sind den Unteransprüchen zu entnehmen.

Anhand mehrerer Zeichnungen wird ein Schalter mit den vorgenannten Eigenschaften erläutert. Es zeigen:
- Fig. 1: einen Schalter, umfassend ein Griffteil, ein Drehteil mit einer Seilspule in einem Gehäuse in perspektivischer Darstellung;
- Fig. 2: einen Teilschnitt durch das Drehteil und das Griffteil mit der Darstellung einer Kontur am Griffteil, die mit einem elastischen Element am Drehteil zusammenwirkt;
- Fig. 3: das Drehteil mit einer einstückig daran angeordneten konkav nach außen geschwungenen Biegefeder als elastisches Element;
- Fig. 4: eine konvex nach radial außen gekrümmte Variante der Biegefeder mit einem balligen Federende an einer Pfanne an einer Anformung am Griffteil;
- Fig. 5: eine mit Windungen versehene Biegefeder, deren Federende in einer Anformung am Griffteil drehbar und formschlüssig gefügt ist.

Wird mit 1 ein Gehäuse eines Schalters zur Betätigung eines Fahrradgetriebes bezeichnet, so lässt sich dieses am Fahrrad, insbesondere am Lenker des Fahrrades, befestigen und ist derart ausgebildet, dass in diesem ein Drehteil 4 aufgenommen wird, das eine Seilspule 5 aufweist, die ein Zugseil 6 umschlingt, wobei das Zugseil 6 mit einem Ende am Fahrradgetriebe und mit dem anderen Ende auf der Seilspule befestigt ist. Das Gehäuse 1 weist ferner an einem inneren Umfang eine Innenverzahnung 2 auf, die mit einer Klinke 7 in einer das Zugseil 6 freigebenden Schaltrichtung S sperrend zusammenwirken kann, wobei die Klinke 7 auf dem Drehteil 4 einteilig angeordnet und gegen diese Innenverzahnung 2 angefedert ist. Die Innenverzahnung 2 weist Zähne auf, deren Abstände voneinander vorzugsweise jeweils eine Gangstufe des Fahrradgetriebes ausmachen. In dem beschriebenen Einbauzustand des Drehteils 4 im Gehäuse 1 lässt sich das Drehteil 4 somit nur in einer das Zugseil 6 spannenden Schaltrichtung F verdrehen, wobei die Klinke 7 über die Innenverzahnung 2 hinwegläuft. Soll das Drehteil 4 in der das Zugseil 6 freigebenden Schaltrichtung S verdrehbar sein, so muß die Klinke 7 aus der Innenverzahnung 2 ausgehoben werden. Auf der Seilspule 5 lastet ein Drehmoment , das das Zugseil 6 vom Fahrradgetriebe her erzeugt. Wird also die Klinke 7 ausgehoben, so dreht sich das Drehteil 4 mit der Seilspule 5 in der Schaltrichtung S weiter.

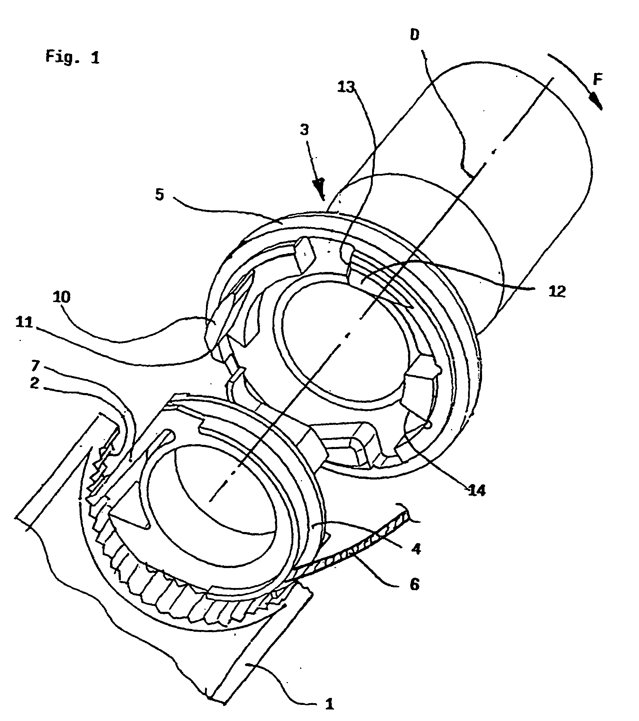

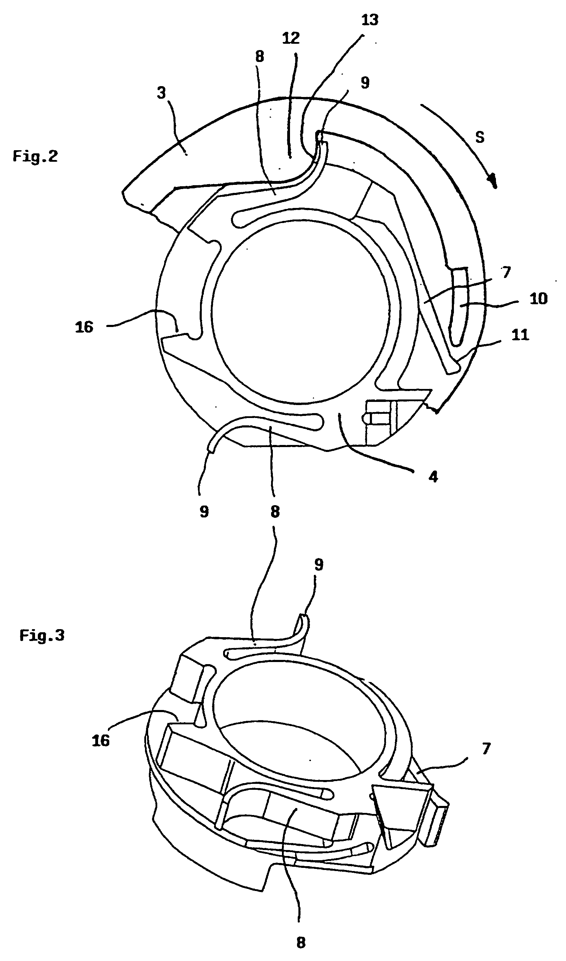

Gemäß den Figuren 1, 2 und 3 ist ein elastisches Element 8 einteilig mit dem Drehteil 4 verbunden, wobei das elastische Element 8 aus einer Biegefeder mit einem Federende 9 besteht. Die Biegefeder ist nach radial außen konkav ausgelegt und bildet somit einen Bogen.

Dem Drehteil 4 ist ein Griffteil 3 zugeordnet, welches einen Ausheber 10 mit einer Nase 11 und eine Anformung 12 mit einer Kontur 13 aufweist. Die Kontur 13 wirkt mit dem Bogen des als Biegefeder ausgestalteten elastischen Elements 8 zusammen, wenn das Griffteil 3 in der das Zugseil 6 freigebenden Schaltrichtung S verdreht wird. Die Kontur 13 der Anformung 12 gleitet am Bogen des elastischen Elements 8 auf und erzeugt solange Vorspannung, bis die Klinke 7 vom Ausheber 10 ausgehoben wird.

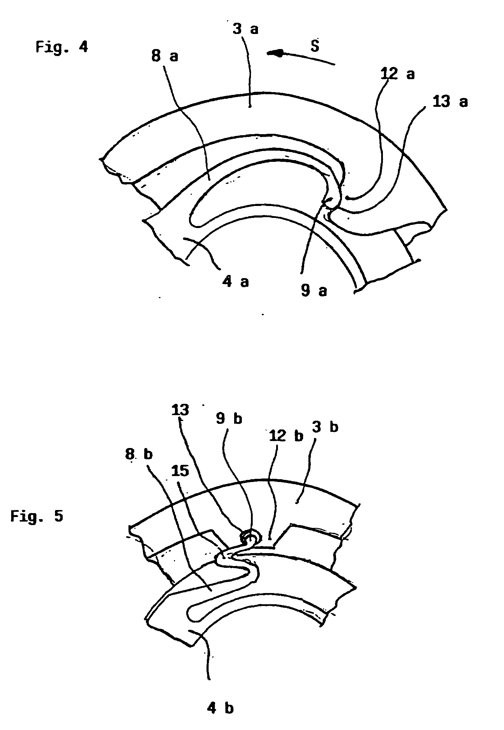

Gemäß Figur 4 wird ein elastisches Element 8a beschrieben, welches einteilig mit einem Drehteil 4a verbunden ist und aus einer Biegefeder besteht, die nach radial außen konvex gebogen ist und ein Federende 9a aufweist, das ballig ausgeführt ist und in einer Pfanne 13a an einer Anformung 12a eines Griffteils unter Vorspannung anliegt.

Gemäß Figur 5 verbindet ein elastisches Element 8b ein Drehteil 4b mit einem Griffteil 3b, wobei das elastische Element 8b als Biegefeder mit mindestens einer Windung 15 ausgestattet ist und ein Federende 9b aufweist, das in einer Aufnahme 13b einer Anformung 12b am Griffteil 3b drehbar, aber formschlüssig gelagert ist.

Die Vorteile der Varianten gemäß den Figuren 4 und 5 wurden bereits beschrieben, nicht aber die Schaltbarkeit aller Varianten in der das Zugseil 6 spannenden Schaltrichtung: Hier sorgt eine erste Flanke 14 am Griffteil 3,3a,3b für die Mitnahme des Drehteils 4,4a,4b über eine dort angeordnete zweite Flanke 16.

Schließlich wird vorgeschlagen, am Umfang des Drehteils 4,4a,4b nicht nur ein elastisches Element 8,8a,8b anzuordnen, sondern deren mindestens zwei in einer zu einer Drehachse D symmetrischen Anordnung, wobei diese Anordnung am gleichen Umfang auch in etwa gleiche Abstände der elastischen Elemente 8,8a,8b zueinander bedingt. Der Grund liegt in der Vermeidung von freien nach radial außen gerichteten Kräften, die zusätzliche Reibung verursachen könnten.

### Bezugszeichenliste

- F: Die das Zugseil spannende Schaltrichtung
- S: Die das Zugseil 6 freigebende Schaltrichtung
- D: Drehachse
- 1: Gehäuse
- 2: Innenverzahnung
- 3: Griffteil
- 3a: Griffteil
- 3b: Griffteil
- 4: Drehteil
- 4a: Drehteil
- 4b: Drehteil
- 5: Seilspule
- 6: Zugseil
- 7: Klinke
- 8: Elastisches Element
- 8a: Elastisches Element
- 8b: Elastisches Element
- 9: Federende
- 9a: Federende
- 9b: Federende
- 10: Ausheber
- 11: Nase
- 12: Anformung
- 12a: Anformung
- 12b: Anformung
- 13: Kontur
- 13a: Pfanne
- 13b: Aufnahme
- 14: erste Flanke
- 15: Windung
- 16: zweite Flanke

## Patentansprüche

1. Schalter zur Betätigung eines Getriebes an einem Fahrrad, umfassend ein Gehäuse (1) mit einer Innenverzahnung (2), ein Griffteil (3,3a,3b) sowie ein Drehteil (4,4a,4b) mit einer Seilspule (5) zum Aufwickeln eines Zugseiles (6), wobei am Drehteil (4,4a,4b) eine Klinke (7) angeordnet ist, die mit der Innenverzahnung (2) zusammenwirkt und von einem Ausheber (10) ausgehoben werden kann,
**dadurch gekennzeichnet,**
**dass** zwischen dem Griffteil (3,3a,3b) und dem Drehteil (4,4a,4b) mindestens ein elastisches Element (8,8a,8b) angeordnet ist, welches einteilig mit wahlweise dem Griffteil (3,3a,3b) oder dem Drehteil (4,4a,4b) verbunden ist.

2. Schalter nach Anspruch 1,
**dadurch gekennzeichnet,**
**dass** das elastische Element (8,8a,8b) mit dem Griffteil (3,3a,3b) verbunden ist.

3. Schalter nach Anspruch 1 oder 2,
**dadurch gekennzeichnet,**
**dass** das elastische Element (8,8a,8b) mit dem Drehteil (4,4a,4b) verbunden ist.

4. Schalter nach Anspruch 1 oder 3,
**dadurch gekennzeichnet,**
**dass** zur Erzeugung einer Vorspannung beim Schalten in der das Zugseil (6) freigebenden Schaltrichtung (S) vor dem Ausheben der Klinke (7) eine am Griffteil (3) angeordnete Kontur (13) einer Anformung (12) gegen das elastische Element (8) gepresst wird.

5. Schalter nach Anspruch 1 oder 3,
**dadurch gekennzeichnet,**
**dass** zur Erzeugung einer Vorspannung beim Schalten in der das Zugseil (6) freigebenden Schaltrichtung (S) vor dem Ausheben der Klinke (7) eine am Griffteil (3a) angeordnete Pfanne (13a) einer Anformung (12a) gegen das elastische Element (8a) gepresst wird.

6. Schalter nach Anspruch 5,
**dadurch gekennzeichnet,**
**dass** beim Einfedem des elastischen Elements (8a) das Federende (9a) an der Pfanne (13a) weitgehend ohne Erzeugung von Reibung abrollt.

7. Schalter nach Anspruch 1 oder 3,
**dadurch gekennzeichnet,**
**dass** zur Erzeugung einer Vorspannung beim Schalten in der das Zugseil (6) freigebenden Schaltrichtung (S) vor dem Ausheben der Klinke (7) eine am Griffteil (3b) angeordnete Aufnahme (13b) einer Anformung (12b) das Federende (9b) des elastischen Elementes (8b) aufnimmt und die Vorspannung auf dieses überträgt

8. Schalter nach Anspruch 7,
**dadurch gekennzeichnet,**
**dass** das elastische Element (8b) eine Biegefeder mit mindestens einer Windung (15) ist, deren Federende (9b) in der Aufnahme (13b) drehbar, jedoch formschlüssig befestigt ist.

9. Schalter nach einem der vorangegangenen Ansprüche,
**dadurch gekennzeichnet,**
**dass** die am Drehteil (4,4a,4b) angeordneten elastischen Elemente (8,8a,8b) zur Vermeidung von nach außerhalb gerichteten Kraftvektoren zu einer Drehachse (D) und zueinander in etwa symmetrisch angeordnet sind.

10. Schalter nach Anspruch 9,
**dadurch gekennzeichnet,**
**dass** vorzugsweise zwei elastische Elemente (8,8a,8b,) in etwa gegenüber liegend angeordnet sind.

## Claims

1. Switch for actuating a gear on a bicycle, comprising a housing (1) with an inner toothing formation (2), and also comprising a grip part (3, 3a, 3b) and a rotary part (4, 4a, 4b) with a cable drum (5) for winding up a traction cable (6), there being arranged on the rotary part (4, 4a, 4b) a pawl (7) which interacts with the inner toothing formation (2) and can be disengaged by a disengagement means (10), **characterized in that** arranged between the grip part (3, 3a, 3b) and the rotary part (4, 4a, 4b) is at least one elastic element (8, 8a, 8b) which is connected integrally optionally to the grip part (3, 3a, 3b) or the rotary part (4, 4a, 4b).

2. Switch according to Claim 1, **characterized in that** the elastic element (8, 8a, 8b) is connected to the grip part (3, 3a, 3b).

3. Switch according to Claim 1 or 2, **characterized in that** the elastic element (8, 8a, 8b) is connected to the rotary part (4, 4a, 4b).

4. Switch according to Claim 1 or 3, **characterized in that**, in order to produce pretensioning during the operation of switching in the switching direction (S), in which the traction cable (6) is released, prior to the disengagement of the pawl (7), a contour (13) which is arranged on the grip part (3) and belongs to an integrally formed section (12) is pressed against the elastic element (8).

5. Switch according to Claim 1 or 3, **characterized in that**, in order to produce pretensioning during the operation of switching in the switching direction (S), in which the traction cable (6) is released, prior to the disengagement of the pawl (7), a socket (13a) which is arranged on the grip part (3a) and belongs to an integrally formed section (12a) is pressed against the elastic element (8a).

6. Switch according to Claim 5, **characterized in that**, when the elastic element (8a) is deflected, the resilient end (9a) rolls on the socket (13a) largely without friction being produced.

7. Switch according to Claim 1 or 3, **characterized in that**, in order to produce pretensioning during the operation of switching in the switching direction (S), in which the traction cable (6) is released, prior to the disengagement of the pawl (7), a receiving means (13b) which is arranged on the grip part (3b) and belongs to an integrally formed section (12b) accommodates the resilient end (9b) of the elastic element (8b) and transmits the pretensioning to the same.

8. Switch according to claim 7, **characterized in that** the elastic element (8b) is a spiral spring with at least one turn (15), of which the resilient end (9b) is fastened in a rotatable, but form-fitting, manner in the receiving means (13b).

9. Switch according to one of the preceding claims, **characterized in that**, in order to avoid outwardly directed force vectors, the elastic elements (8, 8a, 8b) arranged on the rotary part (4, 4a, 4b) are arranged approximately symmetrically in relation to an axis of rotation (D) and to one another.

10. Switch according to Claim 9, **characterized in that** preferably two elastic elements (8, 8a, 8b) are arranged such that they are located approximately opposite one another.

## Revendications

1. Dispositif de changement de vitesse pour l'actionnement d'une boîte de vitesse sur une bicyclette, comprenant un boîtier (1) avec une denture intérieure (2), un élément à manette (3, 3a, 3b), ainsi qu'une pièce rotative (4, 4a, 4b) avec une bobine à câble (5) pour enrouler un câble de traction (6), un cliquet (7) coopérant avec la denture intérieure (2) et pouvant être soulevé par un râteau (10) étant agencé sur la pièce rotative (4, 4a, 4b), **caractérisé en ce qu'**au moins un élément élastique (8, 8a, 8b) relié en monobloc au choix soit à l'élément à manette (3, 3a, 3b) soit à la pièce rotative (4, 4a, 4b), est agencé entre l'élément à manette (3, 3a, 3b) et la pièce rotative (4, 4a, 4b).

2. Dispositif de changement de vitesse selon la revendication 1, **caractérisé en ce que** l'élément élastique (8, 8a, 8b) est relié à l'élément à manette (3, 3a, 3b).

3. Dispositif de changement de vitesse selon l'une quelconque des revendications 1 ou 2, **caractérisé en ce que** l'élément élastique (8, 8a, 8b) est relié à la pièce rotative (4, 4a, 4b).

4. Dispositif de changement de vitesse selon l'une quelconque des revendications 1 ou 3, **caractérisé en ce qu'**un contour (13) d'un façonnage (12) disposé sur l'élément à manette (3) est comprimé contre l'élément élastique (8), pour produire une précontrainte lors du changement de vitesse dans le sens de changement de vitesse (S) libérant le câble de traction (6) avant le soulèvement du cliquet (7).

5. Dispositif de changement de vitesse selon l'une quelconque des revendications 1 ou 3, **caractérisé en ce qu'**une crapaudine (13a) d'un façonnage (12a) disposée sur l'élément à manette (3a) est comprimée contre l'élément élastique (8a), pour produire une précontrainte lors du changement de vitesse dans le sens de changement de vitesse (S) libérant le câble de traction (6) avant le soulèvement du cliquet (7).

6. Dispositif de changement de vitesse selon la revendication 5, **caractérisé en ce que** lors de la compression du ressort de l'élément élastique (8a), l'extrémité du ressort (9a) se déroule sur la crapaudine (13a) en ne provoquant quasiment aucune friction.

7. Dispositif de changement de vitesse selon l'une quelconque des revendications 1 ou 3, **caractérisé en ce qu'**un logement (13b) d'un façonnage (12b) disposé sur l'élément à manette (3b) recueille l'extrémité du ressort (9b) de l'élément élastique (8b) et transmet la précontrainte sur celui-ci pour produire une précontrainte lors du changement de vitesse dans le sens de changement de vitesse (S) libérant le câble de traction (6) avant le soulèvement du cliquet (7).

8. Dispositif de changement de vitesse selon la revendication 7, **caractérisé en ce que** l'élément élastique (8b) se présente sous la forme d'un ressort de flexion avec au moins une spire (15), dont l'extrémité du ressort (9b) est fixée dans le logement (13b) de façon rotative, mais toutefois par complémentarité de forme.

9. Dispositif de changement de vitesse selon l'une quelconque des revendications précédentes, **caractérisé en ce que** les éléments élastiques (8, 8a, 8b) disposés sur la pièce rotative (4, 4a, 4b) sont agencés à peu près symétriquement par rapport à un axe de rotation (D) et l'un par rapport à l'autre, pour éviter des vecteurs de force dirigés vers l'extérieur.

10. Dispositif de changement de vitesse selon la revendication 9, **caractérisé en ce que** de préférence deux éléments élastiques (8, 8a, 8b) sont agencés à peu près l'un en face de l'autre.
